# EUROPEAN PATENT APPLICATION

(11) **EP 1 081 529 A2**
(43) Date of publication of application: **07.03.2001**
(21) Application number: 00117448.1
(22) Date of filing: 11.08.2000
(51) Int. Cl.: G02B 26/10

(54) **Reflective dither spring**

(30) Priority: 30.08.1999 US 385295
(71) Applicant: PSC Scanning, Inc., Eugene, Oregon 97402-9120 (US)
(72) Inventor: Chadwick, Jeffrey L., Monroe, Oregon 97456 (US)
(74) Representative: Viering, Jentschura & Partner

(57) **Abstract**

A scanning system is provided with a dithering assembly configured to have improved shock resistance. In a preferred construction, the dithering assembly includes a dither mount and a reflective spring having a support end attached to the dither mount and a free end. The free end of the reflective spring may include a magnet for moving the reflective spring in an oscillating manner. As the reflective spring oscillates, a light source generates a reading beam that is directed at the spring for scanning target indicia, such as a bar code label.

## Description

### Background Of The Invention

The field of the present invention relates to optical readers, such as bar code scanners, and particularly to a scanning system having improved resistance to mechanical shock and vibration.

A variety of scan modules and their scanning mechanisms are known as described in, for example, U.S. Patent No. 5,475,206 or U.S. Application Ser. No. 08/934,487, each of these disclosures hereby incorporated by reference as if fully set forth herein. Such scanning mechanisms typically comprise rotating polygon mirror assemblies and dithering or oscillating mirror assemblies. U.S. Patent No. 5,629,510, also hereby incorporated by reference, describes a dithering light source assembly whereby the laser diode itself is dithered to create a scan beam.

Dithering assemblies typically comprise a cantilevered mirror and a drive means or dithering motor for moving the mirror. In one construction, the mirror is supported via a spring or flexure. In particular, a support end of the flexure is attached to a dither mount, while the free end of the flexure has a mirror bracket mounted thereto. The mirror bracket holds the mirror. The drive means typically comprises at least one magnet mounted to the mirror bracket and a stationary motor coil near the magnet. When the motor coil is energized, the mirror is pivoted about the free end of the flexure, causing the mirror to dither or oscillate. As the mirror oscillates, a light beam may be directed at the mirror and reflected off it for scanning a target indicia, such as a bar code label.

The large combined mass of the mirror, mirror bracket, and one or more magnets at the free end of the spring of a typical dither assembly can experience operational problems. Because the assembly is relatively sensitive to mechanical shock and vibration, damage to the scanner components is common due to overflexure or buckling of the flexure. In addition to being susceptible to mechanical shock and vibration, typical dithering assemblies are often difficult to build and costly. Having recognized these conditions, a scanning system having an improved dithering assembly is desired.

### Summary Of The Invention

The preferred embodiments relate to a scanning system having a dithering assembly configured to be less susceptible to mechanical shock and vibration. In a preferred construction, the dithering assembly includes a reflective spring having a support end attached to a dither mount. The free end of the reflective spring may include a magnet for moving the reflective spring in an oscillating manner.

A dithering assembly constructed according to the disclosed embodiments is easy to build and relatively inexpensive compared to typical dithering assemblies. Moreover, a scanning system utilizing a dithering assembly according to the disclosed embodiments is resistant to mechanical shock and vibration due to the reduced amount of mass the spring must support compared to known dithering assemblies. Various other embodiments may utilize some but not all of the above elements, or may include additional refinements, while obtaining the benefit of an improved dithering assembly.

### Brief Description Of The Drawings

The various objects, features, and advantages of the present invention may be better understood by examining the Detailed Description of the Preferred Embodiments found below, together with the appended figures, wherein:
Fig. 1 is a top view of a scanning system including a dithering assembly according to a first embodiment;
Fig. 2 is a detailed top view of a dithering assembly according to the first embodiment;
Fig. 3 is a side view of a dithering assembly according to the first embodiment;
Fig. 4 is a top view of a scanning system including a dithering assembly according to a second embodiment;
Fig. 5 is a top view of a scanning system including a dithering assembly according to a third embodiment;
Fig. 6 is a top view of an illustrative scan module including a scanning system having a dithering assembly according to a fourth embodiment; and
Fig. 7 is a side view of a handheld scanner as may be utilized by the scanning systems illustrated in Figs. 1-6.

### Detailed Description Of The Preferred Embodiments

The preferred embodiments will now be described with respect to the drawings. To facilitate the description, any numeral identifying an element in one figure will represent the same element when used in any other figure.

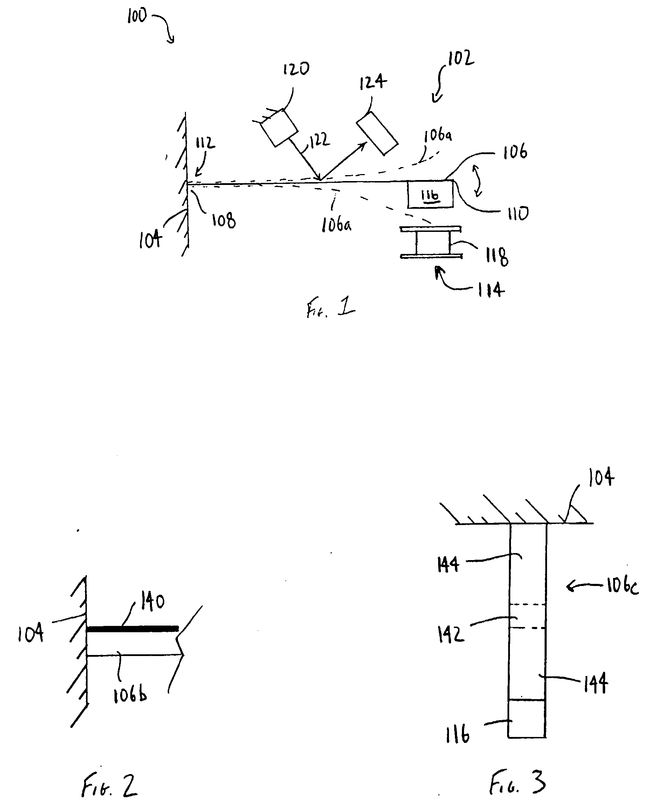

Fig. 1 shows a scanning system 100 including a dithering assembly 102 according to a first embodiment. The dithering assembly 102 includes a support 104, such as a dither mount. The dither mount 104 may be mounted to a base, such as a chassis (not shown) of a scanning module. A flexure or spring 106 includes a support end 108 mounted to the dither mount 104 and a free end 110. The support end 108 of the spring 106 is preferably mounted orthogonally to the dither mount 104 in a cantilevered fashion. When a force is applied against the free end 110 of the spring 106, the spring 106 bends or flexes about a nodal point 112. Fig. 1 illustrates the nodal point 112 of the spring 106 is adjacent the support end 108 of the spring 106.

Each of the springs, such as spring 106, in the disclosed embodiments is reflective. "Reflective" means having a mirror finish or mirror-like properties. For example, each of the springs may be plated or coated with a reflective material such as chrome or other suitable component, polished to create a mirrored surface, subjected to a surface treatment, or other suitable means commonly known to those skilled in the art. Alternatively, the spring itself may be made from a material having mirror-like properties such that additional treatments or components may not be need to make the spring reflective.

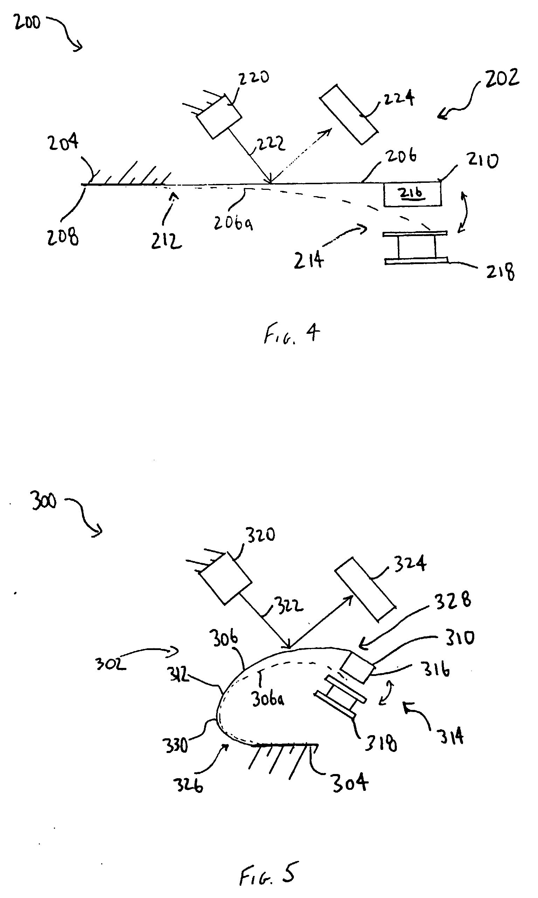

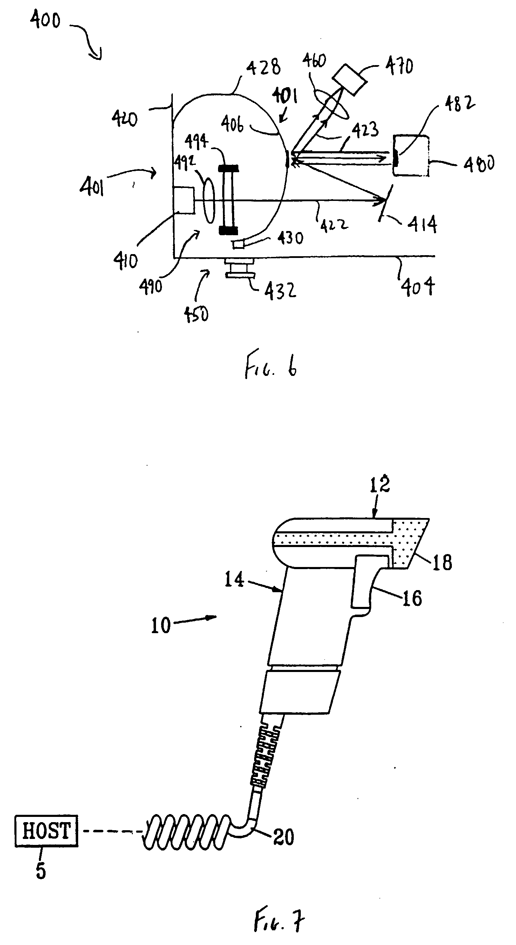

Regardless of how the spring is reflective, the entire surface of the spring need not be. For example, Fig. 2 illustrates a spring 106b that may include a reflective coating or metallic plating 140 on only one side of the spring 106b. Fig. 3 illustrates a spring 106c that may include a mirror or reflective portion 142 and a non-reflective portion 144.

Each of the springs that may be utilized by the embodiments is preferably planar and may be constructed from metal such as beryllium copper alloy, aluminum, steel, titanium, or plastic such as Mylar™, or combinations thereof. The dither mount 104 may also be constructed from metal, plastic, rubber or other flexible material.

An electro-magnetic drive mechanism 114 preferably comprising a magnet 116 and a stationary motor coil 118 drives or moves the reflective spring 106 in a dithering or oscillating manner. Fig. 1 illustrates the magnet 116 may be attached to the free end 110 of the spring 106 opposite the dither mount 104. The stationary motor coil 118 is proximate the magnet 116. Although this arrangement is preferred, the drive mechanism 114 may include, for example, the spring 106, which may be comprised of ferromagnetic material in its entirety or only a portion thereof, and the coil 118, which may be mounted at or about the free end 110 of the spring 106.

When the drive mechanism 114 is energized, the magnet 116 is attracted to or repulsed by the coil 118. When current is no longer applied to the coil 118, the biasing force of the spring 106 returns the spring 106 to its original position. Fig. 1 illustrates the spring 106 dithering in at least two directions, as indicated by the dashed lines 106a.

In operation, as shown for example in Fig. 1, a light source 120, such as a semiconductor laser diode, generates a reading beam 122 that is directed toward the reflective spring 106. As the spring 106 oscillates, the reading beam 122 may be reflected off of the spring 106 for scanning a target 124, such as a package having a bar code label thereon.

Figs. 4-6 illustrate, for example, alternative dithering assembly embodiments. Those skilled in the art will recognize that each of the embodiments disclosed in this application may be modified or portions combined depending on the type of target indicia to be read and/or the scanning environment. Thus, although the embodiments disclosed in Figs. 1-6 may be particularly useful for generating single scan lines, the embodiments may also be adapted to generate multi-line or omni-directional scan patterns depending on the desired scanning operation.

Fig. 4 shows a scanning system 200 including a dithering assembly 202 according to a second embodiment. Similar to the first embodiment, the dithering assembly 202 includes a support 204, such as a dither mount, and a reflective spring 206 having a support end 208 and a free end 210. The support end 208, as well as a portion of the spring 206 adjacent the support end 208, is preferably mounted substantially parallel to the dither mount 204. In this manner, when a force is applied against the free end 210 of the spring 206, the spring 206 bends or flexes about a nodal point 212, which may be approximately halfway between the support end 208 and the middle 226 of the spring 206. The force may be generated via an electro-magnetic drive 214, as disclosed above, that preferably includes a magnet 216 mounted to the free end 210 of the spring 206 and a motor coil 218 proximate the magnet 216.

Unlike the embodiment shown in Fig. 1, because a portion of the spring 206 adjacent the support end 208 is mounted substantially parallel to the dither mount 204, when the drive mechanism 214 of system 200 is energized, the spring 206 dithers in only one direction, as indicated by the dashed line 206a. However, as a portion of the spring 206 adjacent the support end 208 is supported by the dither mount 204, the embodiment illustrated in Fig. 2 may have an increased resistance to mechanical shock and vibration.

In operation, a light source 220 generates a reading beam 222 that is directed toward the reflective spring 206. As the spring 206 oscillates, the reading beam 222 may be reflected off of the spring 206 for scanning a target, such as target 224, which may have a coded indicia thereon.

Fig. 5 shows a scanning system 300 including a dithering assembly 302 according to a third embodiment. Similar to the first and second embodiments, the dithering assembly 302 includes a reflective spring 306 mounted to a support 304, such as a dither mount. Unlike the springs 106, 206 in the first two embodiments, the spring 306 is curved. The curved shape of spring 306 may be formed via techniques commonly known to those skilled in the art, such as by bending and prestressing the spring where the curve is desired.

The curved shape of reflective spring 306 is defined by a first arm 326 and a second arm 328. The first arm 326 is preferably shorter than the second arm 328. Due to this asymmetrical shape, the nodal point 312 of the spring 306 is not at the curved portion 330, as it would be with a symmetrical or U-shaped configuration. Such an asymmetrical shape may allow for an increased durability against fatigue and cracking as the spring 306 does not continually flex at its inherently stressed, curved portion 330.

Similar to the embodiment shown in Fig. 4, a portion of the spring 306 adjacent the support end 308 may be mounted substantially parallel to the dither mount 304. Accordingly, the spring 306 bends or flexes in only one direction, as indicated by dashed line 306a, when a force is applied against the free end 310 thereof, such as by a drive mechanism. Drive mechanism 314 preferably includes a magnet 316 mounted at the free end 310 of the spring 306 and a stationary motor coil 318 mounted near the magnet 316.

As a portion of the spring 306 adjacent the support end 308 is supported by the dither mount 304, the spring 306 may be less likely to encounter high degrees of angular movement which may improve resistance to mechanical shock and vibration, as well as fatigue.

Fig. 6 illustrates a scanning module 401 that includes a scanning system 400 having a dithering assembly 402 similar to the one illustrated in Fig. 5. The dithering assembly 402 shown in Fig. 6 differs from assembly 302 in that the curved spring 406 does not have a portion of its end supported by the dither mount 420. In particular, the support end 416 of the spring 406 is mounted or attached to the dither mount 420, similar to the attachment arrangement shown in Figs. 1-3.

Fig. 6 illustrates the dither mount 420 may be mounted to a base, such as chassis 404. As shown in Fig. 6, chassis 404 may support a light source 410, such as a semiconductor laser diode for generating a reading beam 422.

In operation, the reading beam 422 may be directed toward a mirror, such as fold mirror 414, which then reflects the beam 422 toward the reflective spring 406. Fig. 6 illustrates the spring 406 may include a mirrored or reflective portion 412 and non-mirrored portion 428. The fold mirror 414 is supported within the module 400 such that the reading beam 422 is reflected toward the reflective portion 412 of the spring 406. Upon impact, the beam 422 is then redirected or reflected away from the spring 406 toward a target, such as a package 480 having a coded indicia 482 thereon. In order to scan the beam 422 across the coded indicia, a drive mechanism 450 preferably including a magnet 430 and a coil 432 is energized to dither the spring 406, as disclosed above. Return light 423 which is reflected and/or refracted off the target 480 reflects off the reflective portion 412 to a collection system, such as collection optics 460 which focus the light onto a detector 470.

The systems according to disclosed embodiments may be particularly well-suited for use with a handheld scanner such as that illustrated in Fig. 7 and disclosed in U.S. Patent No. 5,260,554, which patent is incorporated by reference as if fully set forth herein. The systems, however, may be utilized with a fixed scanner (such as the fixed scanners disclosed in U.S. Patent Application Serial No. 08/659,982, filed June 7, 1996, and in U.S. Patent Application Serial No. 09/275,921, filed March 24, 1999, which applications are incorporated by reference as if fully set forth herein), or utilized with a handheld scanner, or any combination thereof (such as a handheld scanner that can be mounted on a stand).

Turning in detail to Fig. 7, a handheld scanner 10 utilizing a dither assembly according to the disclosed embodiments may be configured as a handheld gun-shaped device constructed of a lightweight plastic housing having a head portion 12 and pistol-grip type handle portion 14. The head portion 12 may contain a removable scan module, such as module 401 illustrated in Fig. 6. The scan module may contain a light source, a scanning system, such as systems 100, 200, 300, 400, a detector, and optics and signal processing circuitry. The scanner 10 may be attached to a host 5 via a cable 20, connected or incorporated into a portable data terminal, or may be cordless, powered by an internal battery, for communicating with the host via wireless link or storing data in memory for periodic download, such as when integrated in a portable data terminal. A light-transmissive window 18 in the front end of the scan head portion 12 permits an outgoing light beam, such as beams 122, 222, 322, 422, to exit and the incoming reflected light to enter. The user aims the reader 10 at a target indicia such as a bar code symbol and actuates a trigger 16 on the handle portion 14 to activate the light source and scanning mechanism to scan the beam across the symbol.

A scanning system that utilizes a dithering assembly 102, 202, 302, 402 may prove less susceptible to mechanical shock and vibration than typical scanning mechanisms. The increased resistance to shock and vibration is a result of the reduction in mass on the free end of the spring 106, 206, 306, 406, i.e., dithering assemblies 102, 202, 302, 402 constructed according to these embodiments do not have a mirror and a mirror bracket mounted to the free end of the spring 106, 206, 306, 406. Moreover, dithering assemblies 102, 202, 302, 402 are easy to build and relatively inexpensive compared to typical dithering assemblies.

A scanning system that utilizes a dithering assembly 102, 202, 302, 402 may optionally include pointing adjustment features. For example, either the dither mount 104, 204, 304, 420 or the light source (laser) assembly 120, 220, 320, 410 or both may include features for adjusting horizontal and/or vertical pointing of the out-going reading beam 122, 222, 322, 422. The fold mirror assembly 414 may also contain such pointing adjustment features. Such pointing adjustment features are known as described in, for example, U.S. Patent Nos. 5,717,194 or 5,796,222, each of these disclosures hereby incorporated by reference as if fully set forth herein. Fig. 6 illustrates one of the pointing adjustment features disclosed in detail in U.S. Patent No. 5,717,194. In particular, Fig. 6 illustrates a pointing adjustment feature 490 that may comprise an optical assembly having lens 492 and phase mask 494.

While preferred embodiments are disclosed herein, many variations are possible which remain within the concept and scope of the invention. Such variations would become clear to one of ordinary skill in the art after inspection of the specification and drawings herein. The invention therefore is not to be restricted except within the spirit and scope of the appended claims.

## Claims

1. A dithering assembly comprising:
a support;
a reflective spring supported by the support; and
a drive mechanism for moving the reflective spring in an oscillating manner.

2. A dithering assembly according to claim 1 wherein the drive mechanism includes a magnet mounted at one end of the spring.

3. A dithering assembly according to claim 1 wherein the spring is mounted substantially orthogonal to the support.

4. A dithering assembly according to claim 1 wherein the spring is mounted substantially parallel to the support.

5. A dithering assembly according to claim 1 wherein the spring is curved.

6. A dithering assembly according to claim 5 wherein a portion of the spring adjacent one end thereof is mounted substantially parallel to the support.

7. A dithering assembly according to claim 1 wherein the spring is chrome-plated.

8. A dithering assembly according to claim 1 wherein a portion of the spring is reflective.

9. A ditherer comprising:
a dither mount;
a flexible reflector having a support end attached to the dither mount and a free end; and
a magnet mounted to the free end of the reflector.

10. A ditherer according to claim 9 wherein the reflector is a planar, chrome-plated spring.

11. A ditherer according to claim 10 wherein the reflector is curved.

12. A ditherer according to claim 9 wherein the reflector is attached substantially orthogonal to the dither mount.

13. A ditherer according to claim 9 wherein a portion of the reflector is attached substantially parallel to the dither mount.

14. A ditherer according to claim 13 wherein the reflector has a first arm and a second arm, wherein one arm is longer than the other.

15. A ditherer according to claim 9 wherein a portion of the reflector is reflective.

16. A scanning system comprising:
a light source;
a dither mount;
a reflective spring supported by the dither mount; and
a drive mechanism,
wherein the light source generates a reading beam that is directed toward the reflective spring,
wherein the drive mechanism oscillates the reflective spring for scanning the reading beam about a target indicia.

17. A scanning system according to claim 16 wherein the spring includes a support end and a free end, wherein the drive mechanism includes a magnet mounted at the free end.

18. A scanning system according to claim 17 wherein the spring has a nodal point adjacent the support end.

19. A scanning system according to claim 17 wherein the spring has a nodal point located between the support end and the free end, wherein the nodal point is closer to the support end than the free end.

20. A scanning system according to claim 16 wherein the spring is curved.

21. A scanning system according to claim 16 wherein the spring includes a first arm and a second arm, wherein the first arm is shorter than the second arm.

22. A scanning system according to claim 16 wherein the spring is chrome-plated and planar.

23. A scanning system according to claim 16 wherein a portion of the spring is reflective.

24. A scanning system according to claim 16 further comprising a pointing adjustment feature for adjusting horizontal and/or vertical pointing of the reading beam.

25. A method of scanning coded indicia such as a bar code label comprising the steps of:
mounting a reflective spring to a support;
directing a light beam at the reflective spring; and
moving the reflective spring in an oscillating manner for scanning the light beam about a coded indicia.

26. A method of scanning coded indicia according to claim 25 wherein the spring includes a magnet attached at one end thereof for moving the reflective spring in an oscillating manner.

27. A dithering assembly comprising:
a support; and
a spring mounted to the support,
wherein the spring is reflective for reflecting light at a target indicia for data reading.
